# EUROPEAN PATENT APPLICATION

(11) **EP 4 475 202 A1**
(43) Date of publication of application: **11.12.2024**
(21) Application number: 23863478.6
(22) Date of filing: 05.09.2023
(51) Int. Cl.: H01M 4/04, F26B 21/00, B05B 9/04, B05B 1/30, B05B 12/08, B05B 12/12, G01P 5/07

(54) **MOISTURE-SUPPLYING DEVICE OF ELECTRODE-DRYING APPARATUS**

(30) Priority: 06.09.2022 KR 20220113047
(71) Applicant: LG Energy Solution, Ltd., Seoul 07335 (KR)
(72) Inventor: KIM, Dong Hae, Daejeon 34122 (KR); SO, Ki Han, Daejeon 34122 (KR); KWON, Oh Cheol, Daejeon 34122 (KR); KO, Young Kuk, Daejeon 34122 (KR); PARK, Min Gu, Daejeon 34122 (KR)
(74) Representative: Plasseraud IP
(86) International application number: PCT/KR2023/013279
(87) International publication number: WO 2024/054011

(57) **Abstract**

Disclosed herein relates to an electrode drying device including: a drying oven in which an interior space is formed for drying an electrode sheet to which an electrode slurry is applied on a current collector, and a hot air spray nozzle for spraying hot air on an electrode sheet being transferred into the drying oven, wherein a moisture supply device of the drying device includes: a water spray nozzle that sprays moisture on a non-coating part of an electrode sheet being transferred into the drying oven; a water storage tank where water is stored; and a pump installed in a water storage tank to supply water to a water spray nozzle, wherein the hot air spray nozzle dries an electrode sheet by spraying hot air, and the water spray nozzle may spray moisture on the non-coating part of the electrode sheet.

## Description

### [Technical Field]

The present invention relates to a moisture supply device for an electrode drying device.

More specifically, it relates to a moisture supply device of an electrode drying device which can supply moisture to a non-coating part of an electrode sheet during drying of an electrode sheet on which an electrode slurry is applied to a current collector, thereby preventing wrinkling, cracking, and the like of the non-coating part during the drying process.

This application claims the benefit of priority to Korean Patent Application No. 10-2022-0113047, filed on September 6, 2022, the disclosure of which is incorporated herein by reference in its entirety.

### [Background Technology of the Invention]

In recent years, important trends in the development of the electronics industry can be summarized as the wireless and mobile trends in devices and the transition from analog to digital. Examples include the rapid proliferation of cordless phones (i.e., cell phones) and laptops, and the transition from analog to digital cameras.

Along with these trends, research and development of secondary batteries is actively underway, and the types of applications using secondary batteries are diversifying due to their advantages, and it is expected that in the future, secondary batteries will be applied to many more fields and products than today.

Here, secondary batteries are not only being used in portable devices such as cell phones, laptops, and camcorders, but also as an energy source for electric vehicles and hybrid electric vehicles, which are being proposed as a way to solve air pollution such as existing gasoline and diesel vehicles that use fossil fuels.

Generally, secondary batteries are classified based on the shape of the battery case. There are cylindrical and prismatic batteries where an electrode assembly is embedded in cylindrical and prismatic metal cans, respectively, and pouch-type battery cells where an electrode assembly is embedded in an aluminum laminate sheet pouch-type case.

Furthermore, the electrode assembly embedded in the battery case is a power generator capable of charging and discharging by comprising a positive electrode plate, a negative electrode plate, and a separator interposed between the positive electrode plate and the negative electrode plate, and is classified into a jelly-roll type that is wound by interposing a separator between the positive electrode plate and the negative electrode plate in the form of a long sheet on which each active material is applied, and a stack-type that sequentially stacks a plurality of positive electrode and negative electrode plates formed in a predetermined size while interposing a separator.

These secondary batteries are categorized into lithium-ion batteries, lithium-ion polymer batteries, and lithium polymer batteries, depending on the composition of electrodes and electrolytes. Typically, the electrodes of these lithium secondary batteries are formed by coating the positive electrode or negative electrode active material onto a current collector made of aluminum or copper sheets, mesh, film, foil, and the like and then drying it.

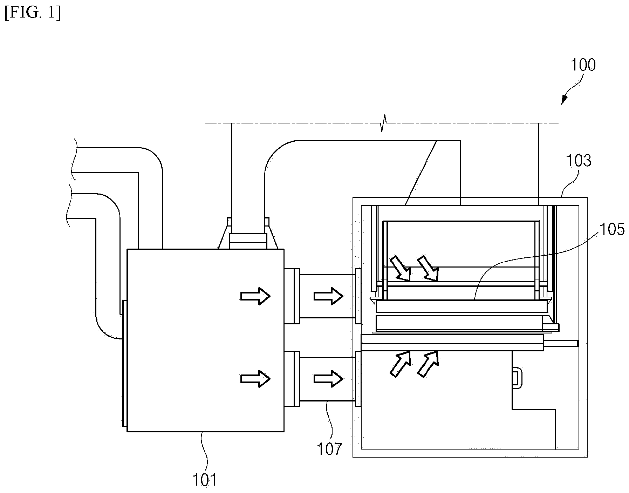

Here, a drying process for drying an electrode sheet 105, in which an electrode slurry is applied to a current collector through an electrode drying device 100, as shown in FIG. 1, is used, and hot air supplied from a supply fan of a hot air supply device 101 is sprayed onto the electrode sheet 105 by a nozzle installed in a drying oven 103 through a duct 107, and the electrode sheet 105 is dried by convection of the hot air supplied in the drying oven 103.

In such cases, changes in drying conditions can alter the drying of the electrode sheet and the adhesion between the slurry and the current collector. This can be caused by differences in the structure due to residual moisture in the slurry, residual solvents, and the distribution of the binder, which can result in significant differences in the properties of the manufactured electrodes.

Meanwhile, there was a problem that at least one non-coating part not coated with a slurry is formed on the electrode sheet which is moved and supplied to the electrode drying device, and when the electrode sheet is dried by hot air in the drying oven, the part of the electrode sheet containing slurry shrinks, and due to the shrinkage of the part of the electrode sheet, the part of the electrode sheet not containing slurry is subjected to concentrated stress, which may cause wrinkles or cracks in the non-coating part, which may cause a deterioration of the quality of the electrode.

### [Prior Art Documents]

(Patent Document 001) Korean Patent Publication No. 10-2170893

### [Description of the Invention]

### [Technical Problem]

The present invention aims to solve the above-mentioned problems, and to provide a moisture supply device of an electrode drying device capable of supplying moisture to a non-coating part of the electrode sheet during drying of an electrode sheet in which an electrode slurry is applied to a current collector, thereby preventing the occurrence of wrinkles or cracks in the non-coating part during the drying process.

In addition, the present invention aims to provide a moisture supply device of an electrode drying device capable of detecting and measuring the amount of moisture supplied in the drying oven in real time, and controlling the amount of moisture supplied in the drying oven through the measured value to stably supply moisture to the non-coating part.

### [Technical Solution]

In order to achieve the aforementioned objectives, the present invention provides an electrode drying device including: a drying oven in which an interior space is formed for drying an electrode sheet to which an electrode slurry is applied on a current collector, and a hot air spray nozzle for spraying hot air on an electrode sheet being transferred into the drying oven, wherein a moisture supply device of the drying device includes: a water spray nozzle that sprays moisture on a non-coating part of an electrode sheet being transferred into the drying oven; a water storage tank where water is stored; and a pump installed in a water storage tank to supply water to a water spray nozzle, wherein the hot air spray nozzle dries an electrode sheet by spraying hot air, and the water spray nozzle sprays moisture on the non-coating part of the electrode sheet.

As an exemplary embodiment, the water spray nozzle may be provided on the upper side of the non-coating part in a number corresponding to the number of non-coating part formed on an electrode sheet.

As another exemplary embodiment, a flow control part installed in the water storage tank to control the flow of water supplied to the water spray nozzle through a pump may be further included.

As a specific exemplary embodiment, the flow control part may include a flow rate measurement unit that measures the flow rate of water supplied to the water spray nozzle through the pump, and a flow control unit that controls the flow of water.

As a more specific exemplary embodiment, the flow rate measurement unit may include a measuring unit body having an inlet pipe into which water from a water storage tank flows and an outflow pipe connected to a pump and supplying water to the pump, a rotating body rotatably installed within the measuring unit body, and a detection sensor for detecting rotation of the rotating body.

As another specific exemplary embodiment, the inlet pipe may be provided at either the lower or upper part of one side of the measuring unit body, and the outflow pipe may be provided at either the upper or lower part of the other side of the measuring unit body.

As an exemplary embodiment, the rotating body may include a rotating body rotating about a rotational axis, a plurality of blades spaced apart at certain distance on an outer circumference of the rotating body, and a magnetic material installed on any one or more of the plurality of blades, wherein the detection sensor may be a Hall sensor that detect changes in the magnetic flux of the magnetic material installed on the blade.

As another exemplary embodiment, the flow control unit may control the flow of water supplied to the water spray nozzle by controlling the pump based on the measurement values of the flow rate measurement unit.

As an exemplary embodiment, the drying oven may be equipped with a moisture measurement unit for measuring the moisture of the drying oven.

As a specific exemplary embodiment, the flow of water supplied to the water spray nozzle may be controlled by controlling the pump based on the moisture measurement values measured by the moisture measurement unit.

### [Advantageous Effects]

According to the present invention, moisture may be supplied to a non-coating part of an electrode sheet during drying of the electrode sheet to prevent wrinkles or cracks from occurring in the non-coating part, the quality of the electrode may be improved, the amount of moisture supplied in the drying oven may be detected and measured in real time, the amount of moisture supplied in the drying oven may be controlled through the measured value to stably supply moisture to the non-coating part, and an electrode sheet of uniform quality may be manufactured.

### [Brief Description of the Drawings]

FIG. 1 is a schematic diagram of a typical configuration of an electrode drying device according to the prior art.
FIG. 2 is a schematic drawing of an electrode drying device according to the present invention.
FIG. 3 is an enlarged, schematic perspective view of a moisture supply device of an electrode drying device according to an exemplary embodiment of the present invention installed in a drying oven.
FIG. 4 is a perspective view schematically illustrating a flow control unit installed in a water storage tank of a moisture supply device according to an exemplary embodiment of the present invention.
FIG. 5 is a side view schematically illustrating the flow rate measurement unit of the flow control unit of the moisture supply device according to an exemplary embodiment of the present invention.
FIG. 6 is a block diagram illustrating a flow control unit of a flow control part of a moisture supply device according to an exemplary embodiment of the present invention.
FIGS. 7 through 9 are diagrams schematically illustrating an operation process of a flow measurement unit according to the present invention.
FIG. 10 is a diagram schematically illustrating a moisture measurement unit installed on one side of a moisture supply device of an electrode drying device according to another exemplary embodiment of the present invention.

### [Best Mode for Carrying out the Invention]

The following is a detailed description of the present invention. It should be noted that the terms or words used in this specification and the claims of the patent are not to be construed in their ordinary or dictionary sense, but rather in a sense and concept consistent with the technical idea of the invention, based on the principle that the inventor may properly define the concept of a term to best describe his invention.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

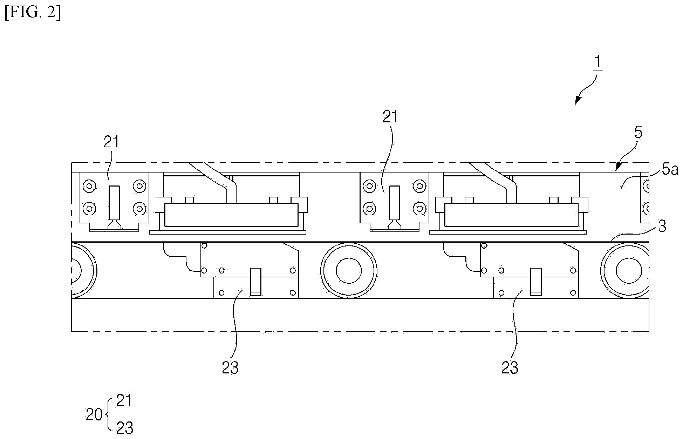

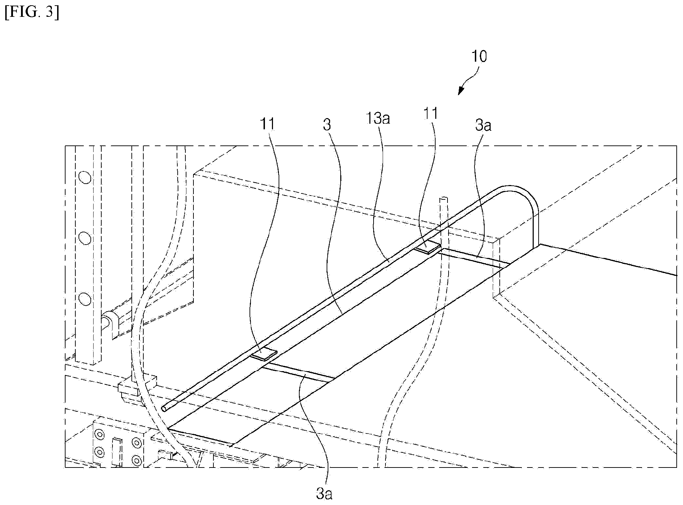

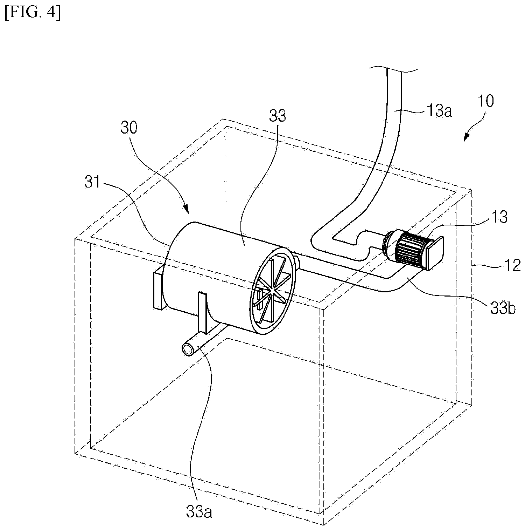

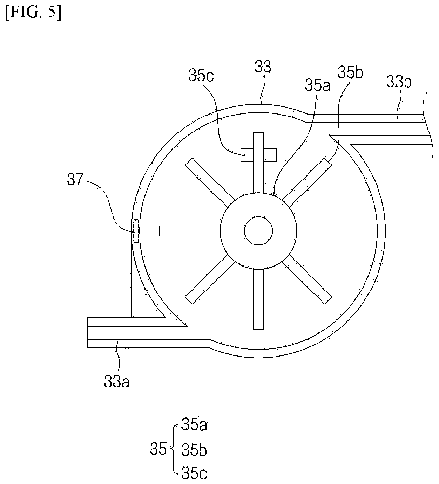

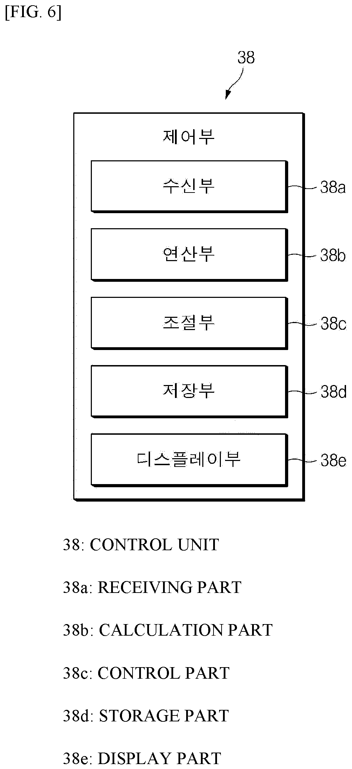

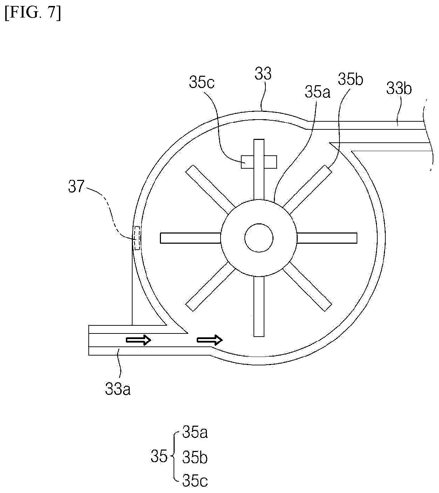

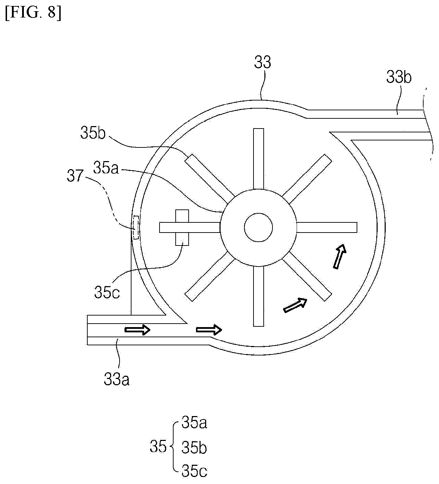

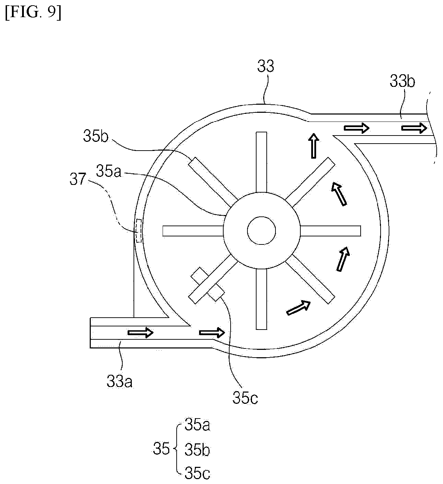

FIG. 2 is a schematic drawing of an electrode drying device according to the present invention. FIG. 3 is an enlarged, schematic perspective view of a moisture supply device of an electrode drying device according to an exemplary embodiment of the present invention installed in a drying oven. FIG. 4 is a perspective view schematically illustrating a flow control unit installed in a water storage tank of a moisture supply device according to an exemplary embodiment of the present invention. FIG. 5 is a side view schematically illustrating the flow rate measurement unit of the flow control unit of the moisture supply device according to an exemplary embodiment of the present invention. FIG. 6 is a configuration diagram illustrating a flow control unit of a flow control part of a moisture supply device according to an exemplary embodiment of the present invention. FIGS. 7 through 9 are diagrams schematically illustrating an operation process of a flow measurement unit according to the present invention.

As illustrated in the drawings, an electrode drying device 1 according to the present invention is for drying an electrode sheet 3 on which an electrode slurry including an electrode active material has been applied to a current collector, and is configured by including a drying oven 5 in which an interior space is formed for drying the electrode sheet 3, and a hot air spray nozzle for spraying hot air on the electrode sheet 3 being transferred into the drying oven 5.

The drying oven 5 has a structure in which the electrode sheet 3 on which the electrode slurry is applied to the current collector is heated and dried by hot air as it is moved by a roller, and is in the form of including a plurality of drying chambers 5a inside, but is shown simplified in the drawings of the present invention.

And, the hot air spray nozzle 20 may be formed in a plurality, including an upper hot air spray nozzle 21 and a lower hot air spray nozzle 23 provided on an upper and a lower part of the electrode sheet 3, respectively, within the drying oven 5, and is connected by a duct (not shown) to a hot air generating unit (not shown) that generates hot air, for drying the electrode sheet 3 by spraying hot air supplied through the hot air generating unit 20 onto the electrode sheet 3.

Here, the drying oven 5 is provided with a moisture supply device 10 for supplying moisture to the non-coating part 3a formed on the electrode sheet 3 to suppress and prevent the occurrence of wrinkles and cracks and the like in the non-coating part 3a.

Specifically, the moisture supply device 10 of an electrode drying device according to an exemplary embodiment of the present invention includes a water spray nozzle 11 for spraying moisture on the non-coating part 3a of an electrode sheet 3 being transferred into the drying oven 5, a water storage tank 12 in which water is stored, and a pump 13 installed within the water storage tank 12 for supplying water to the water spray nozzle 11.

The water storage tank 12 has a storage space for storing water formed therein, the pump 13 installed within the water storage tank 12 is connected to the water spray nozzle 11 by a discharge pipe 13a, and water from the water storage tank 12 is supplied to the water spray nozzle 11 through the discharge pipe 13a by driving the pump 13.

In this case, the pump 13 may be made of a pump 13 driven by pressure or by rotation of an impeller, but is not limited thereto, and various changes can be practiced.

Here, the water spray nozzle 11 may be provided on the upper side of the non-coating part 3a in a number corresponding to the number of non-coating part 3a formed on the electrode sheet 3.

To this end, a discharge pipe 13a connected to the pump 13 may extend to the upper side of the electrode sheet 3, and the discharge pipe 13a may be provided with a number of water spray nozzles 11 corresponding to the non-coating part 3a.

In this case, the water spray nozzles 11 may be spaced apart at certain distance in the TD direction, which is transverse to the MD direction, which is the direction of movement of the electrode sheet 3, and may be provided correspondingly to the number of non-coating parts 3a.

By the structure as described above, it is possible to prevent wrinkling and cracking of the non-coating part 3a of the electrode sheet 3 by spraying hot air on the electrode sheet 3 from the hot air spray nozzle and spraying moisture on the non-coating part 3a from the water spray nozzle 11 during drying.

Meanwhile, within the water storage tank 12, a flow control part 30 may be installed for controlling the flow of water supplied to the water spray nozzle 11 via the pump 13. In other words, a flow control part 30 may be installed for controlling the flow of water supplied via the pump 13 to more precisely control the amount of water supplied to the water spray nozzle 11.

Here, the flow control part 30 may include a flow rate measurement unit 31 for measuring the flow rate of water supplied to the water spray nozzle 11 via the pump 13, and a flow control unit 38 for controlling the flow of water thereby.
The flow rate measurement unit 31 is for measuring the flow rate of water supplied from the water storage tank 12 to the pump 13, and includes a measuring unit body 33, a rotating body 35, and a detection sensor.

The measuring unit body 33 includes an inlet pipe 33a into which water from the water storage tank 12 flows, and an outflow pipe 33b connected to the pump 13, which supplies water flowing into the inlet pipe 33a to the pump 13.
Here, the measuring unit body 33 may be fixedly installed on one side wall of the water storage tank 12.

The rotating body 35 is rotatably installed within the measuring unit body 33. For this purpose, the internal space of the measuring unit body 33 in which the rotating body 35 is installed may be formed in a cylindrical shape.

The rotating body 35 includes a rotating body 35a rotating about a rotational axis, a plurality of blades 35b spaced apart at certain distance on an outer circumference of the rotating body 35a, and a magnetic material 35c installed on any one or more of the plurality of blades 35b.

In accordance with the structure as described above, water flowing into the inlet pipe 33a provided on one side of the measuring unit body 33 pressurizes the blade 35b in the measuring unit body 33 to rotate the rotating body 35, and then flows out of the outflow pipe 33b provided on the other side of the measuring unit body 33, and the water flowing out of the outflow pipe 33b is supplied to the pump 13.

The detection sensor detects the rotation of the rotating body 35. For this purpose, the detection sensor detects the rotation of the rotating body 35 by detecting a magnetic material 35c provided on one side wall of the measuring unit body 33 opposite the rotating body 35 and provided on a blade 35b of the rotating body 35a.

To this end, the detection sensor may be a Hall sensor that detects changes in the magnetic flux of the magnetic material 35c installed on the blade 35b.

In this way, the detection sensor is provided on one side of the rotating body 35 to detect a change in the magnetic flux of the magnetic material 35c installed on the blade 35b when the rotating body 35 is rotated by the incoming water, thereby detecting the number of rotations and/or the rotational speed of the rotating body 35 and thereby detecting the flow rate of the water supplied to the pump 13.

In an exemplary embodiment of the present invention, a magnetic material 35c including a magnet is provided on the blade 35b of the rotating body 35a, and a Hall sensor is installed on the side wall of the measuring unit body 33 as a detection sensor to detect the rotation of the rotating body 35 through a change in the magnetic flux of the magnetic material 35c, but other various structures and forms of sensors are possible, provided that the rotation of the rotating body 35 can be detected.

Here, an inlet pipe 33a may be provided at a lower or upper part of one side of the measuring unit body so as to facilitate rotation of the rotating body 35 installed within the measuring unit body 33, and an outflow pipe 33b may be provided at an upper or lower part of the other side of the measuring unit body 33 so that water introduced into the measuring unit body 33 through the inlet pipe 33a is discharged to the pump 13 after rotating the rotating body 35.

The flow control unit 38 is for controlling the flow of water supplied to the water spray nozzle 11 according to measurement values including a flow rate measured via the flow rate measurement unit 31, to which the pump 13 is controllably connected.

The flow control unit 38 may include a receiving part 38a, a calculation part 38b, a control part 38c, a storage part 38d, and a display part 38e.

The receiving part 38a may receive a measurement value measured via the flow rate measurement unit 31. That is, the receiving part 38a receives a change in the magnetic flux of the magnetic material 35c detected via the detection sensor in the measuring unit body 33.

The calculation part 38b may calculate a flow rate by the number of rotations and/or a rotational speed of the rotating body 35 per minute (m/s) from the measurement values received via the receiving part 38a.

In addition, the calculation part 38b may calculate the flow rate supplied to the water spray nozzle 11 via the pump 13 by the number of rotations and/or the rotational speed of the rotating body 35.

The control part 38c may control the pump 13 to increase or decrease the amount of water supplied when the flow rate of water supplied to the pump 13 through the calculation value of the calculation part 38b is slow or fast, or when the amount of flow of water sprayed onto the non-coating part 3a of the electrode sheet 3 through the water spray nozzle 11 is less or more.

The storage part 38d may store various information such as drying condition of the electrode sheet 3, humidity condition, measurement value, set water supply amount, etc. The storage part 38d is a storage module capable of inputting/outputting information such as ROM memory, flash memory, CF card (Compact Flash Card), SD card (Secure Digital Card), etc. and is preferably provided within the flow control unit 38, but it is also possible to be provided in a separate device and connected to it, without limitation.

The display part 38e may display the air volume of the hot air sprayed within the electrode drying device 1, the amount of moisture sprayed, and the amount of water supplied, etc. to visually recognize the operator.

Meanwhile, the flow control unit 38 may further include a comparing part and a judging part. Specifically, the flow control unit 38 may further include a comparing part that compares a detection count of the magnetic material 35c detected through the detection sensor or compares a rotation speed per hour of the rotating body 35 according to the detection time with a preset setting value, and a judging part that judges the amount of water spray on the non-coating part 3a of the electrode sheet 3 through the water spray nozzle 11 based on the comparison value compared through the comparing part.

In addition, the flow control unit 38 may further include an alarm part, and through the alarm part, a warning sound or a notification sound may be generated in the event of an abnormal situation or the like in the electrode drying device 1 to make the manager aware of the abnormal situation.

As mentioned above, the flow control unit 38 may control the flow supplied to the water spray nozzle 11 by controlling the pressure of the pump 13 and/or the rotational speed of the impeller to increase or decrease according to the measurement value of the flow rate measurement unit 31, thereby controlling the amount of water supplied to the water spray nozzle 11 and, consequently, controlling the amount of water sprayed to the non-coating part 3a of the electrode sheet 3 through the water spray nozzle 11.

For example, a change in the magnetic flux of the magnetic material 35c detected through the detection sensor may cause the pressure or rotational speed of the pump 13 to be increased to increase the flow of the pump 13 and consequently increase the amount of water supplied to the water spray nozzle 11 if the rotational speed of the rotating body 35 is slow, and the pressure or rotational speed of the pump 13 to be decreased to decrease the flow of the pump 13 and consequently decrease the amount of water supplied to the water spray nozzle 11 if the rotational speed of the rotating body 35 is fast.

In addition, if the rotation speed of the rotating body 35 is slower than the preset rotational speed through the change in the magnetic flux of the magnetic material 35c detected through the detection sensor, it may be determined that the current water supply is less than the actual set water supply, and the pressure or rotational speed of the pump 13 is increased to increase the flow of the pump 13, thereby increasing the amount of water supplied to the water spray nozzle 11, and if the rotational speed of the rotating body 35 is faster than the preset rotational speed, it may be determined that the current water supply is greater than the actual preset water supply, and decrease the pressure or rotational speed of the pump 13 to decrease the flow of the pump 13, thereby decreasing the amount of water supplied to the water spray nozzle 11.

Furthermore, even when the rotational speed of the rotating body 35 is slow outside the range of the preset rotational speed through a change in the magnetic flux of the magnetic material 35c detected through the detection sensor, or when the rotational speed of the rotating body 35 is fast outside the range of the preset rotational speed, the amount of water supplied to the water spray nozzle 11 can be adjusted by controlling the pressure or rotational speed of the pump 13 to adjust the flow of the pump 13, as described above.

Hereinafter, the operation process of the moisture supply device of the electrode drying device according to an exemplary embodiment of the present invention will be briefly described with reference to the drawings.

First, the electrode sheet 3 with the electrode slurry applied on the current collector is transferred into the drying oven 5 of the electrode drying device 1, and hot air generated by the heat generating device is sprayed onto the electrode sheet 3 moving in the drying oven 5 through the hot air spray nozzle.

At this time, water is sprayed from the water spray nozzle 11 to the non-coating part 3a of the electrode sheet 3. That is, by driving the pump 13, water in the water storage tank 12 is supplied to the water spray nozzle 11 connected by the pump 13 and the discharge pipe 13a, and the water spray nozzle 11 sprays water to the non-coating part 3a of the electrode sheet 3.

In this way, by separately spraying moisture on the non-coating part 3a during drying of the electrode sheet 3, it is possible to prevent the occurrence of wrinkles and cracks in the non-coating part 3a, which is subjected to concentrated stress by shrinkage of the electrode due to drying.

Meanwhile, as illustrated in FIGS. 7 to 9, the amount of water supplied to the water spray nozzle 11 via the pump 13 may be controlled more precisely by the flow control unit 30. That is, the amount of water supplied to the water spray nozzle 11 may be controlled by controlling the flow of water supplied by the pump 13 through a measurement value measured through the flow rate measurement unit 31 of the flow control part 30.

That is, water introduced into the inlet of the measuring unit body 33 of the flow rate measuring unit 31 by driving the pump 13 pressurizes the blade 35b to rotate the rotating body 35, and the magnetic material 35c installed on the blade 35b is detected by the detection sensor, detecting a change in the magnetic flux of the magnetic material 35c to measure the rotational speed of the rotating body 35, and controlling the flow of the pump 13 through the measured rotational speed of the rotating body 35 may control the amount of water supplied to the water spray nozzle 11.

### (Second embodiment)

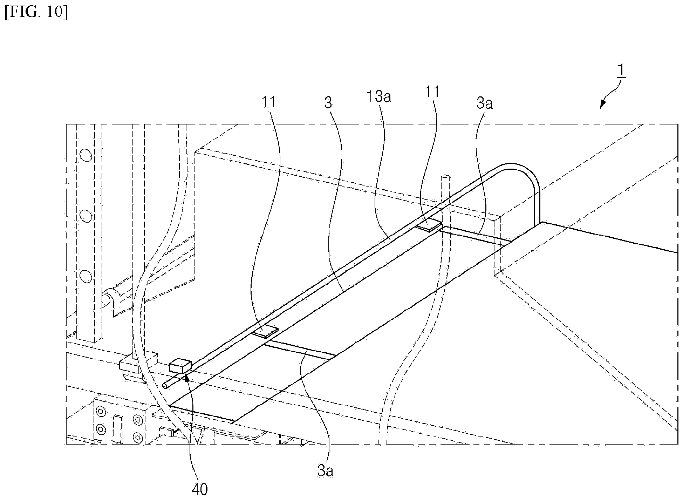

FIG. 10 is a diagram schematically illustrating a moisture measurement unit installed on one side of a moisture supply device of an electrode drying device according to another exemplary embodiment of the present invention.
As shown in the drawing, the moisture supply device 10 of the electrode drying device according to another exemplary embodiment of the present invention is provided with a moisture measurement unit 40 for measuring moisture in the drying oven 5.

In this case, the moisture measurement unit 40 for measuring the moisture in the drying oven 5 is preferably provided at a position proximate to the non-coating part 3a of the electrode sheet 3 moving in the drying oven 5, but the position of the moisture measurement unit 40 can be varied without limitation.

The pump 13 may be controlled to control the flow of water supplied to the water spray nozzle 11 based on a moisture measurement value including a moisture amount or moisture percentage measured by the moisture measurement unit 40.

In this case, the moisture measurement unit 40 may comprise a sensor for measuring moisture in the drying oven 5, and the moisture measurement unit 40 may be connected to the flow control unit 38 of the flow control part 30, and through the moisture measurement value measured by the moisture measurement unit 40, the flow control unit 38 of the flow control part 30 may control the flow of the pump 13 to regulate the amount of water supplied into the drying oven 5.

Specifically, through the moisture measurement value measured by the moisture measurement unit 40, the amount of water supplied to the water spray nozzle 11 in the drying oven 5 can be decreased when the amount of moisture or the moisture percentage in the drying oven 5 is higher than the preset amount of moisture or the moisture percentage, and the amount of water supplied to the water spray nozzle 11 in the drying oven 5 can be increased when the amount of moisture or the moisture percentage in the drying oven 5 is lower than the preset amount of moisture or the moisture percentage.

Furthermore, through the moisture measurement value measured by the moisture measurement unit 40, if the moisture amount or moisture percentage in the drying oven 5 is higher than the range of the preset moisture amount or moisture percentage, the amount of water supplied to the water spray nozzle 11 in the drying oven 5 can be reduced, and if the moisture amount or moisture percentage in the drying oven 5 is lower than the range of the preset moisture amount or moisture percentage, the amount of water supplied to the water spray nozzle 11 in the drying oven 5 can be increased.

As mentioned above, by regulating the amount of water supplied from the water storage tank 12 to the water spray nozzle 11 by controlling the flow of the pump 13 according to a measurement value measured through the flow rate measurement unit 31 of the flow control part 30, or by controlling the flow of the pump 13 according to a moisture measurement value in the drying oven 5 measured through the moisture measurement unit 40 to adjust the supply amount of water supplied from the water storage tank 12 to the water spray nozzle 11, the supply amount of water sprayed onto the non-coating part 3a of the electrode sheet 3 may be more precisely controlled.

While the present invention has been shown and described with reference to certain embodiments, it will be readily apparent to one of ordinary skill in the art that various modifications and changes can be made without departing from the ideas and scope of the invention as set forth in the appended claims.

### [Reference numerals]

1: ELECTRODE DRYING DEVICE
3: ELECTRODE SHEET
3a: NON-COATING PART
5: DRYING OVEN
5a: DRYING ROOM
10: MOISTURE SUPPLY DEVICE
11: WATER SPRAY NOZZLE
12: WATER STORAGE TANK
13: PUMP
13a: DISCHARGE PIPE
30: FLOW CONTROL PART
31: FLOW RATE MEASUREMENT UNIT
33: MEASURING UNIT BODY
33 a: INLET PIPE
33b: OUTFLOW PIPE
35: ROTATING BODY
35a: ROTATING BODY
35b: BLADE
35c: MAGNETIC MATERIAL
37: DETECTION SENSOR
38: FLOW CONTROL UNIT
38a: RECEIVING PART
38b: CALCULATION PART
38c: CONTROL PART
38d: STORAGE PART
38e: DISPLAY PART
40: MOISTURE MEASUREMENT UNIT

## Claims

1. In an electrode drying device comprising: a drying oven in which an interior space is formed for drying an electrode sheet to which an electrode slurry is applied on a current collector, and a hot air spray nozzle for spraying hot air on an electrode sheet being transferred into the drying oven,
a moisture supply device of the drying device comprises:
a water spray nozzle that sprays moisture on a non-coating part of an electrode sheet being transferred into the drying oven;
a water storage tank where water is stored; and
a pump installed in a water storage tank to supply water to a water spray nozzle; wherein
the hot air spray nozzle dries an electrode sheet by spraying hot air, and the water spray nozzle sprays moisture on the non-coating part of the electrode sheet.

2. The moisture supply device of the electrode drying device according to claim 1, wherein
the water spray nozzle is provided on the upper side of the non-coating part in a number corresponding to the number of non-coating part formed on an electrode sheet.

3. The moisture supply device of the electrode drying device according to claim 1, further comprising:
a flow control part installed in the water storage tank to control the flow of water supplied to the water spray nozzle through a pump.

4. The moisture supply device of the electrode drying device according to claim 3, wherein
the flow control part includes a flow rate measurement unit that measures the flow rate of water supplied to the water spray nozzle through the pump, and a flow control unit that controls the flow of water.

5. The moisture supply device of the electrode drying device according to claim 4, wherein
the flow rate measurement unit includes a measuring unit body having an inlet pipe into which water from a water storage tank flows and an outflow pipe connected to a pump and supplying water to the pump, a rotating body rotatably installed within the measuring unit body, and a detection sensor for detecting rotation of the rotating body.

6. The moisture supply device of the electrode drying device according to claim 5, wherein
the inlet pipe is provided at either the lower or upper part of one side of the measuring unit body, and the outflow pipe is provided at either the upper or lower part of the other side of the measuring unit body.

7. The moisture supply device of the electrode drying device according to claim 5, wherein
the rotating body includes a rotating body rotating about a rotational axis, a plurality of blades spaced apart at certain distance on an outer circumference of the rotating body, and a magnetic material installed on any one or more of the plurality of blades, wherein
the detection sensor is a Hall sensor that detect changes in the magnetic flux of the magnetic material installed on the blade.

8. The moisture supply device of the electrode drying device according to claim 4, wherein
the flow control unit controls the flow of water supplied to the water spray nozzle by controlling the pump based on the measurement values of the flow rate measurement unit.

9. The moisture supply device of the electrode drying device according to claim 3, wherein
the drying oven is equipped with a moisture measurement unit for measuring the moisture of the drying oven.

10. The moisture supply device of the electrode drying device according to claim 9, wherein
the flow of water supplied to the water spray nozzle is controlled by controlling the pump based on the moisture measurement values measured by the moisture measurement unit.
